# EUROPEAN PATENT APPLICATION

(11) **EP 4 822 478 A1**
(43) Date of publication of application: **14.10.2026**
(21) Application number: 26167633.2
(22) Date of filing: 25.03.2026
(51) Int. Cl.: G05D 1/644, G05D 1/693, G08G 5/00, G05D 1/695

(54) **FLIGHT GUIDANCE METHOD**

(30) Priority: 07.04.2025 DE 102025113617
(71) Applicant: Airbus Defence and Space GmbH, 82024 Taufkirchen (DE)
(72) Inventor: GAVRA, Vlad, 82024 Taufkirchen (DE); PÉREZ ACAL, Antonio, 82024 Taufkirchen (DE); WAGENAAR, Thomas, 82024 Taufkirchen (DE); WAßNER, Jan, 82024 Taufkirchen (DE)
(74) Representative: LKGLOBAL Partnerschaftsgesellschaft mbB

(57) **Abstract**

The present disclosure relates to a flight control method for controlling a formation of a plurality of aircraft, comprising the steps of: determining an initial formation state of the plurality of aircraft; establishing a final formation state of the plurality of aircraft; generating a plurality of candidate trajectories for each aircraft from an initial position of the respective aircraft to at least one end position in the final formation state; applying at least one constraint to the plurality of candidate trajectories for each aircraft to provide a reduced trajectory set, wherein the at least one constraint comprises an aircraft-specific parameter; selecting a final trajectory set, each comprising a trajectory from each reduced trajectory set of the corresponding aircraft, such that the final trajectory set is collision-free; and providing the respective trajectory according to the final trajectory set to each corresponding aircraft.

## Description

The present disclosure relates to the flight control of aircraft for implementing a maneuver of an aircraft formation, in particular by means of generating trajectories under predetermined constraints.

With the continuous development of technologies relating to unmanned aerial vehicles (UAVs) and in particular also swarm intelligence, cooperative missions of a UAV formation with increased flexibility for fulfilling complex and variable tasks are highly relevant. For example, search and rescue tasks, resource exploration, reconnaissance and/or monitoring can be implemented. Cooperative trajectory planning of formations is an important component for successful maneuver implementation. Furthermore, there is a need for automated formation control of heterogeneous formations, which comprises different aircraft and/or a combination of manned and unmanned aircraft.

Typical formation flight methods can be limited to predetermined maneuver types and, for example, do not allow any desired maneuvers. Furthermore, formation control can be designed for the direct control of aircraft, with the result that flight control with respect to the specification of trajectories is typically not implemented.

The flight control of aircraft in formation, in particular while maintaining a specific formation during a flight maneuver, constitutes a complex challenge. Typically, specific static instructions are defined for turning maneuvers of manned aircraft. These are also usually limited to two aircraft.

Accordingly, manually defined maneuvers cannot be scalable, with the result that they can no longer be applied for more complex formations with a plurality of aircraft.

Accordingly, it can be considered to be an object to provide efficient flight control for a formation with the generation of trajectories for the aircraft.

According to a first aspect, the present disclosure relates to a flight control method for controlling a formation of a plurality of aircraft. The method comprises determining an initial formation state of the plurality of aircraft. The method further comprises establishing a final formation state of the plurality of aircraft.

The method comprises the step of generating a plurality of candidate trajectories for each aircraft from an initial position of the respective aircraft to at least one final position in the final formation state. Further, the method comprises the step of applying at least one constraint to the plurality of candidate trajectories for each aircraft to provide a reduced trajectory set. The at least one constraint comprises an aircraft-specific parameter.

The method further comprises the step of selecting a final trajectory set, each comprising a trajectory from each reduced trajectory set of the corresponding aircraft, such that the final trajectory set is collision-free. The method further comprises providing the respective trajectory according to the final trajectory set to each corresponding aircraft.

With the method, a group of aircraft can be guided in a formation. In particular, predefined maneuvers or formation changes can be carried out. A formation change can change relative positions of the aircraft within the formation to each other. Furthermore, a formation change can comprise an absolute position change. The planning and control of the flight paths of the individual aircraft can implement a movement in a defined formation, in which collisions are avoided.

The method enables collision-free and smooth flight paths for aircraft flying in a compact formation and carrying out maneuvers. A plurality of flyable trajectories is generated, from which a set of optimal trajectories is selected. The trajectories can be optimized to minimum path length. Furthermore, the trajectories for the aircraft to each other can have a similar path length. As a result, a common arrival time at the end position of a maneuver can be ensured. The formation can be heterogeneous with regard to the aircraft type, and aircraft-specific restrictions can be applied in order to make the trajectories for the corresponding aircraft executable, i.e. flyable. The trajectories can be based on Bézier curves with maximum curvature restrictions.

The guiding of a formation can comprise any coordinated tuning of trajectories for a plurality of aircraft. For example, the guiding of a formation can comprise formation formation, formation changing and/or formation turning. In this case, each trajectory is determined in relation to the trajectories of the further aircraft in a selected group. The guiding of the formation can be based on a maneuver instruction. For example, a formation curve flight, a formation formation, a formation change and/or a coordinated temporally offset position flight can be defined.

A formation curve flight can describe a coordinated flight of a plurality of aircraft in a formation while they are flying a curve.

A formation formation can relate to the converging of aircraft to form a defined formation. This can take place at the start of a flight or after a maneuver in which the aircraft rearrange their positions.

A formation change can define the changing of the structure or arrangement of an existing formation. As a result, a formation can be adapted to changed flight conditions and/or mission requirements. With the method according to the present disclosure, a formation change can be carried out quickly and reliably since the trajectories are determined in such a way that the aircraft reach their new positions within the formation as optimally as possible without endangering the safety and stability of the formation.

A coordinated temporally offset position flight can relate to the flying of aircraft in a formation in which the positions of the individual aircraft are changed in a temporally offset manner and/or end positions of the formations are reached in a temporally offset manner. For example, a paced arrival of the aircraft in the respective target positions can be implemented in order to carry out a specific maneuver.

Advantageously, collision-free and in particular even paths can be implemented for aircraft flying together in compact spaces. Advantageously, the method can be carried out on a single computing core in order to create paths for groups of aircraft points in a predefined time interval. By adapting selected curves, in particular Bézier curves, with regard to flight parameters implementable by the aircraft vehicles, a plurality of kinematically executable trajectories can be generated for each aircraft. The candidate trajectories can be efficiently combined. For example, pairwise symmetries of trajectory conditions can be utilized for generating a final trajectory set.

Types of aircraft can comprise different categories and/or models of aircraft which differ in their technical specifications and possible uses. Examples are commercial aircraft, military aircraft, helicopters and/or unmanned aerial vehicles (UAVs).

The aircraft can be categorized according to their properties. Commercial aircraft have a high capacity for passengers and/or cargo and can advantageously have a long range and/or high efficiency. Military aircraft can have a high maneuverability and/or measures for minimization of visibility. Furthermore, helicopters, multicopter (e.g. quadrocopter, hexacopter, octocopter, etc.), light aircraft can be comprised in a formation.

The formation can comprise a combination of manned and unmanned aerial vehicles. Accordingly, a higher flexibility and efficiency in the performance of specific tasks can be achieved. For example, commercial aircraft and UAVs can cooperate to collect real-time data about weather conditions and adapt the flight routes accordingly. Military formations can integrate manned aerial vehicles and UAVs. This combination enables cooperative control and communication, whereby complex missions can be performed more efficiently.

The method can define an actual state of the formation as a starting point for the planned maneuver. In this case, each aircraft can be defined individually by specific data relating to the respective aircraft. Alternatively, a state of an aircraft of the formation can be defined in reference to the formation and/or in reference to a further aircraft of the formation. The formation state can define the position and the movement state of each aircraft in the formation, in particular at a specific point in time.

Accordingly, the initial formation state is the starting state of the formation in which the positions and flight directions of the individual aircraft are defined. This state serves as a starting point for the planning of the flight paths and maneuvers of the aircraft. The method can take into account a deviation, in particular an interpolation and/or estimation of an expected initial formation state on the basis of an expected latency until providing the respective trajectory according to the final trajectory set to each aircraft.

The final formation state can be defined as the target state of the formation in that, for example, the positions and flight directions of the aircraft are defined after the completion of the planned maneuvers. This state can thus define a desired end result of the flight control. The formation state, or the target state and/or initial state of the formation, can comprise any combination of kinematic variables of the aircraft.

Candidate trajectories can be possible flight paths which can guide each aircraft from its initial position to one or more final positions in the final formation state. Advantageously, these trajectories are generated taking into account the kinematic properties of the aircraft and the requirements of the formation. In this case, the kinematic properties can in particular also comprise aerodynamic properties of the aircraft. Requirements of the formation can comprise, for example, a formation compactness, maximum accelerations during the maneuver, maximum orientation angles, and/or maximum speed differences.

A trajectory can relate to the path which an aircraft covers during its flight through the three-dimensional space and the time (four-dimensional). Factors which comprise the implementation of a trajectory by the aircraft are, for example, thrust, air resistance, lift and/or weight. A trajectory can be defined as a precise description of the movement of the aircraft, which can be used for direct flight planning and/or flight control. Correspondingly, the aircraft can be controlled in such a way that the set trajectory is implemented as exactly as possible.

The trajectory can also be generated in the form of trajectory points or transmitted to the aircraft. In this case, a trajectory point can be defined in particular in delimitation from a classic waypoint, since a geographical position can be linked to an orientation and/or speed.

In one embodiment, control points and an arrival time can be transmitted to the aircraft, or to each aircraft in the formation. This can be implemented in particular when information relating to the generated trajectories, or the final trajectory set, is transmitted from an external source to the respective aircraft or from one of the aircrafts to a further aircraft. The control points and the arrival time can be used to define the speed at which the aircraft is intended to fly.

The trajectory can furthermore be delimited from direct, in particular aircraft-specific, control instructions. The trajectory can be a component of a flight guidance system which transmits instructions and information to the aircraft which the respective aircraft processes in order to generate control commands which implement the trajectory. These commands can be implemented either manually by a pilot or automatically by a flight control system.

The state of an aircraft can comprise any desired kinematic variables. Advantageously, a position vector, a speed vector (heading) and/or a rate of rotation of the aircraft can be comprised. The generation of the trajectories can be carried out in such a way that the continuity of at least one variable defined in the initial state of the respective aircraft can be ensured, i.e. that a corresponding restriction is met. This can be achieved in that turn control points are placed in a specific manner. An angle of climb rate, an equivalent to a rate of rotation, however, in the vertical direction, or others can also be used as kinematic variables.

Correspondingly, the trajectory can be considered as a type of "guidance instruction" which specifies a path which the aircraft should follow. These instructions are then implemented by the flight control system into actual control commands in order to achieve the desired trajectory.

For each aircraft, trajectories can be generated which are as short as possible and/or are not too rich in turns. Furthermore, the generated trajectories can have similar path lengths. The generation of the trajectories can comprise an optimization with respect to predetermined criteria. For this purpose, methods such as gradient descent, genetic algorithms and/or simulated annealing can be used. Additionally or alternatively, on the basis of the preceding chapter, the optimization problem has been implemented with a deterministic step-by-step approach which discretizes the optimization problem in the form of a grid search in order to delimit a search space for suitable trajectories.

As restrictions, boundary conditions, requirements and/or filters can be used which are applied to the candidate trajectories in order to ensure that they can be implemented kinematically and operationally.

The selection of flight paths for each aircraft from the reduced set of candidate trajectories can be carried out taking into account further optimization criteria, such that it can be ensured that the flight paths are collision-free and the aircraft can be transferred safely and efficiently into the final formation state. Advantageously, it can be ensured that the aircraft reach the final positions at an identical time. Alternatively, different arrival times can be defined for the aircraft. With the selection, optimization criteria can be applied.

Providing the trajectory can comprise the selected flight paths being transmitted to the respective aircraft so that they can adapt their flight control accordingly. This can be carried out by direct communication with the flight control systems of the aircraft. Advantageously, the final trajectory can be implemented directly in a guidance system of the aircraft. Alternatively, trajectory data can be transmitted which enable reproduction of the generated trajectory in the aircraft.

In one embodiment, the method can comprise the step of assigning a label to at least one aircraft, in particular also to a selection of aircraft or to each aircraft. The label can define the position of the respective aircraft within the final formation state. Generating the plurality of candidate trajectories for an aircraft with an assigned label can be limited to the position according to the label of the corresponding aircraft in the final formation state.

An assignment can be an "assignment" of the aircraft to a specific position. Accordingly, one, a plurality of or all positions of the target formation can be assigned to an aircraft. As a result, a tactical placement of a plurality of aircraft can be implemented.

A number of target states can be numbered (0...N). With an assignment of a number to an aircraft, it can be defined that this aircraft is to assume the state according to this assigned number. Alternatively, a plurality of numbers can be assigned (e.g. [1, 2, 4]), with the result that the aircraft is to assume one of these selected states. Furthermore, no number can be assigned. This can correspond to an assignment of all numbers [0, ..., N], i.e. all target states are possible.

Accordingly, trajectories can be generated for each of the final positions. Alternatively, it is possible to select which final positions can be possible for which aircraft. For example, the selection can be limited to one final position. According to one example, a subset of aircrafts can each be provided with a label. Furthermore, the method can comprise an automatic assignment of labels to aircraft to which no predetermined label is assigned.

A label can be an identification or marking which is assigned to an aircraft in order to define the position thereof within the formation. This label can contain various information, such as, for example, the specific position of the aircraft in the formation, the role or function thereof within the formation. With the label, it can be defined which aircraft, respectively which position according to the initial formation state, transitions to which position in the final formation state. The formation position transitions can be defined before generating the trajectories. Advantageously, an optimization of the transitions takes place with regard to minimum path length.

The position within the final formation state can relate to the final position which each aircraft in the formation is to assume after all the maneuvers and flight paths have been completed.

The assignment of a label can comprise a heuristic assignment or an optimal assignment.

Instead of taking into account and optimizing trajectories to a plurality of final positions, a heuristic can be used for approximating the optimal label. For example, a deviation of the path lengths of the various aircraft can be minimized. For this purpose, the Euclidean lengths from each starting position to each target position can be taken into account. Correspondingly, an assignment of a label can be carried out on the assumption that each aircraft flies on a straight line to the respective target position. Deviations from this straight line, which are caused e.g. by curvature limitations or collision avoidance, can be disregarded.

The heuristic assignment of labels can be less computationally intensive than the trialling of all identifications. The method can comprise creating a labelling matrix which contains the Euclidean distance from each starting position to each final position. The method can further comprise finding an optimal or at least an acceptable vector according to the labelling matrix which minimizes the lengths between the starting and final points. Advantageously, a threshold value can be defined, wherein a sufficiently optimized position transition combination is present when the threshold value is undershot by the vector.

In an embodiment, generating the plurality of candidate trajectories further comprises the step of defining a neighborhood space corresponding to the initial position and the at least one final position. The trajectories are limited to the neighborhood space.

The advantage can thereby be achieved that, taking into account further maneuver parameters, possible trajectories are limited to a predetermined space and a compact maneuver execution can be implemented. With the restriction to a predetermined space, it can be defined that no point of the respective trajectory lies outside the neighborhood space.

Advantageously, the neighborhood space can be defined by the mathematical definition of the trajectories to be generated.

In an embodiment, each trajectory of the plurality of candidate trajectories can be generated as a control point defined curve, for example a Bézier curve or a B-spline curve, of minimum degree with the restriction of a predetermined maximum curvature threshold value.

A curve can be generated in such a way that the curve is continuous up to the degree which is required to enable subsequent filtering according to flight capability restrictions of the aircraft. Advantageously, each curve can have a G2 continuity for the continuity of velocity and curvature.

The predetermined maximum curvature threshold value can be determined by a flight capability parameter of the respective aircraft. Accordingly, trajectories can be generated whose curvature can also be implemented by the respective aircraft. A maximum curvature threshold value can be velocity-dependent.

Advantageously, a position-parameterized curve, in particular a Bézier curve, is defined as the curve type. The curve can be defined by a set of points Pᵢ which function as coefficients of the curve. A Bézier curve of degree n requires n+1 points and is given by $B \left(s\right) = {\sum }_{i = 0}^{n} \left(\begin{matrix}n \\ i\end{matrix}\right) {\left(1-s\right)}^{n - i} {s}^{i} {P}_{i} , 0 \leq s \leq 1$

Here, s is the curve parameter. At s=0, a Bézier curve runs through P₀ tangentially to P₁ -P₀. This means that the initial constraint can be met by setting P₀ =r₀ and arranging P₁ at an angle α₀ to P₀. Similarly, at s=1, it runs through Pₙ tangentially to Pₙ -Pₙ₋₁. Thus, if Pₙ=r₁ is set and Pₙ₋₁ is placed at an angle α₁ to Pₙ, the final constraints are met. In this case, r₀ can correspond to an original position of the aircraft and r₁ can correspond to a final position of the aircraft. A further advantage of the Bézier curve is that the resulting curve always lies within the convex envelope of the points independently of the number of points used. Therefore, the length of the Bézier curves can be controlled well by the placement of points in the vicinity of one another.

On account of this property, it follows that Bézier curves that satisfy the constraints have three points. In order to enable optimization, four points can be provided accordingly, since two degrees of freedom can thereby be achieved which allow the curve shape to be changed in order to satisfy further constraints.

If orientations (headings) of the aircraft are approximately colinear and r₀ and r₁ lie close to one another, all Bézier points can lie almost on the same line. As a result, a high curve curvature, in particular a sharp kink in the curve, can arise independently of the placement of P₁ and P₂. Accordingly, it can be advantageous to use an additional intermediate point in order to vary a curvature of the curve and to satisfy a corresponding maximum curvature constraint.

The Bézier curve used advantageously has a fourth degree with five Bézier points (P₀ to P₄) and four degrees of freedom. Parameters of this curve can be specified as follows:
- a₀ is the distance between P₀ and P₁ at an angle α₀;
- a₁ and a₂ are the x and y coordinates of P₂;
- a₃ is the distance between P₃ and P₄ at an angle a₁.

According to predefined constraints, the points can be defined as follows: ${P}_{0} = \left({r}_{0 x}, {r}_{0 y}\right)$ ${P}_{1} = \left({r}_{0 x}+{a}_{0}cos\left({α}_{0}\right),{r}_{0 y}+{a}_{0}sin\left({α}_{0}\right)\right)$ ${P}_{2} = \left({a}_{1}, {a}_{2}\right)$ ${P}_{3} = \left({r}_{1 x}-{a}_{3}cos\left({α}_{1}\right),{r}_{1 y}-{a}_{3}sin\left({α}_{1}\right)\right)$ ${P}_{4} = \left({r}_{1 x}, {r}_{1 y}\right)$

In one embodiment, the method can comprise establishing a plurality of fixed points in order to satisfy the kinematic constraints. Furthermore, the method can comprise providing a plurality of intermediate points, such as P₂, in order to generate trajectories with higher complexity. The points can be specified in a three-dimensional space.

In one embodiment, a formation state transition between the initial formation state and the final formation state can comprise a formation curve. Selecting a final trajectory set can further comprise an automatic determination of the end positions of the aircraft based on a minimization of the path length of the trajectories of the final trajectory set.

An automated position exchange within the formation can be implemented. The end positions can be used as a further parameter in order to minimize the path lengths of the final trajectory set. Additionally or alternatively, the end positions can be optimized with respect to other constraints.

In one embodiment, the method can comprise determining a number of control points corresponding to a selected number of degrees of freedom for optimization.

Depending on a predetermined number of degrees of freedom, the number of control points, in particular of Bézier points, can be varied as a basis for the trajectory generation. With increasing number of Bézier points, smoother curves can be generated which satisfy tangential continuity and/or curvature continuity. This is advantageous for the generation of smooth movements. The number of control points can be selected in such a way that a real-time calculation of the trajectories and in particular a real-time execution of the method is maintained.

In an embodiment, the method can further comprise the step of positioning the turn control points, in particular the Bézier points, for each plurality of candidate trajectories according to at least one of the following conditions:
- an angular condition between adjacent curve points;
- a distance condition between adjacent curve points;
- a curvature rate condition at the starting position;
- a further curvature rate condition at at least one end position.

As optimization targets, provision of trajectories with the same trajectory length and/or a certain maximum curvature can advantageously be defined. Further additional optimizations can be defined. Identical trajectory lengths can be realized via an optimization with respect to a constant velocity, or a maximum deviation from a predetermined velocity.

The control points can be set in such a way that a curvature rate at the start of the trajectory and at the end of the trajectory has a predetermined value, or is limited to a predetermined maximum value. As a result, a curvature rate restriction can be complied with when curve segments are connected.

In an embodiment, the method can comprise the step of acquiring aircraft capability data corresponding to the types of aircraft in the plurality of aircraft.

The aircraft capability data can comprise at least one of the following parameters:
- maximum load;
- maximum angular velocity (roll rate, pitch rate, yaw rate);
- maximum acceleration (angular and tangential);
- attitude velocity range (attitude range);
- acceleration capability;
- maximum speed;
- minimum speed;
- maximum climb rate;
- maximum descent rate;
- maximum hang angle;
- maximum pitch angle.

Applying the at least one constraint can comprise selecting trajectories that satisfy conditions according to the aircraft capability data.

Acquiring aircraft capability data can relate to the collecting and recording of specific performance parameters and properties of the aircraft. A trajectory generation and/or trajectory selection can be carried out on the basis of these data, since they can define the kinematic boundaries of the aircraft. Furthermore, corresponding constraints can be based on the aircraft capability data.

The acquisition can be implemented in the form of a database query. Furthermore, with regard to a maneuver to be carried out, each of the aircraft comprised in the formation can provide corresponding aircraft capability data. Advantageously, the aircraft capability data can comprise current flight parameters. For example, an aircraft can transmit at least one of the following parameters: current weight, remaining range, current thrust capacity, current engine power, etc. Advantageously, a maneuver execution and a corresponding trajectory generation can take place on the basis of such real-time flight parameters.

The aircraft capability data can comprise specific performance parameters which describe the capabilities and boundaries of an aircraft.

The maximum load can describe a maximum acting load which the aircraft or its components can withstand without suffering structural damage. This can be, for example, a cumulative acceleration. The maximum angular velocity can be defined as a highest rate at which an aircraft can rotate about one of its three axes (roll, pitch and yaw). These rates can be defined as "attitude rates". Each of the rates can be limit-limited. Furthermore, a permissible interval for a respective rate can also be defined. A visibility of the aircraft can depend on a flight attitude of the aircraft. For example, a discovery and/or discovery risk of an aircraft can be minimized by keeping an orientation of the aircraft as constant as possible. As a result, a curve radius can be limited since the turning can require an oblique attitude of the aircraft. Accordingly, a curvature of the trajectory can be limited. Furthermore, an altitude rate and further parameters can also be limited. Furthermore, a maximum tangential and/or angular acceleration can be defined. The attitude velocity range can describe the bandwidth of the speeds at which an aircraft can change its attitude. This can comprise the speed of the changes in roll, pitch and yaw. The acceleration capability can relate to the capability of an aircraft to vary its speed quickly. A hang angle can in particular be a maximum hang angle. Furthermore, a maximum pitch angle can be defined. The hang angle can be a roll angle which describes a rotation of the aircraft about its longitudinal axis. During a curved flight of the aircraft, the latter can incline to the side. This inclination can be defined by the hang angle.

The pitch angle can describe the rotation of an aircraft about its transverse axis, which can run from one wing to the other. This angle can define how much the nose of the aircraft is inclined upwards or downwards. The pitch angle is relevant for the climbing or descending of the aircraft.

For example, a lower maximum velocity value and/or a higher maximum acceleration can enable paths with a higher curvature. Accordingly, the aircraft can evade each other more easily, so that solutions for smaller arc lengths can be found.

In an embodiment, applying the at least one constraint can comprise determining a shortest-length trajectory from the plurality of candidate trajectories and/or combinatorially selecting trajectories from the plurality of trajectories. The combinatorial selection can take place according to at least one of the following conditions: trajectory lengths of the selected trajectories fall below a trajectory length threshold value proportional to the length of the shortest-length trajectory; a trajectory length difference of each combination of the selected trajectories is below a trajectory length difference threshold value.

The advantage can thereby be achieved that trajectories with minimum length and minimum length deviation to each other can be selected.

If a candidate trajectory of a second aircraft is much longer than the currently selected candidate trajectory of aircraft 1, a transition can be made to the next candidate trajectory of aircraft 2. If, however, all candidate trajectories of aircraft 2 have been traversed, a transition can be made to a next candidate trajectory of aircraft 1 and all candidate trajectories of aircraft 2 are traversed again. For example, a length of the shortest trajectory multiplied by a hyperparameter for the maximum length (maximum length hyperparameter) can be used as a constraint.

A combinatorial search can be carried out. Correspondingly, a comparison of all possible trajectory sets can take place in order to carry out a trajectory set with minimum overall length and/or with minimum trajectory length deviation of the trajectories to each other. The search can be restricted to the effect that the search is ended if a trajectory set with sufficiently small deviations is found. The search can thus be accelerated since not all combinations have to be traversed.

The candidate trajectories can be selected by each aircraft in such a way that the shortest trajectories are found and/or the trajectories to each other have a sufficiently similar length. The aircraft can have different speeds. Here, a selection of trajectories with respect to a similar travel time can take place. Correspondingly, the method can comprise selecting trajectories according to a travel time interval.

In an embodiment, selecting the final trajectory set can further comprise applying a set of selection constraints. The set of selection constraints can comprise at least one of:
- a path length interval;
- an acceleration threshold value;
- an acceleration interval;
- a speed threshold value;
- a speed interval;
- a speed deviation interval;
- a compactness threshold value;
- a minimum distance of the aircraft to each other;
- a curvature threshold value;
- a curvature gradient threshold value;
- a threshold value for the time until the completion of the maneuver;
- an arrival time interval for all the aircraft;
- a trajectory similarity threshold value.

A path length interval can define a range of the possible lengths of the trajectories which each aircraft in the formation can cover. Accordingly, it can be ensured that all the aircraft can synchronously and efficiently reach their optimal final position.

An acceleration threshold value can increase the safety with regard to the execution of the formation transition since maximum executable accelerations can be limited. Thus, each aircraft can have sufficient time to react to movement changes of the further aircraft. In particular, a real-time adaptation of the trajectories can take place and effects of accelerations lying outside the predetermined tolerances with respect to the trajectory can be corrected within permissible latencies. An acceleration interval can define a range of the permissible accelerations for the aircraft. Typically, longer monitoring intervals can be implemented with lower accelerations since there can be a lower risk of deviations from the predetermined movement states.

A speed threshold value can comprise a maximum velocity, a minimum velocity or a target velocity of the aircraft. The speed threshold can be defined with respect to an overall velocity of the aircraft. Alternatively, the speed threshold value can be direction-limited. For example, the speed threshold value can be a climb speed threshold value and/or a descent speed threshold value. Advantageously, an angle, in particular an orientation angle, of the aircraft can thereby be limited. It can be optimized with respect to a deviation from a target velocity that is as small as possible. The more homogeneous the velocity within the group of aircraft, the more efficiently a formation transition can be found with the shortest possible distances and/or the shortest possible flight times between the respective initial position and final position. For this purpose, a permissible speed interval can correspondingly be defined that specifies a range of permissible velocities for the aircraft.

The compactness threshold value can describe the maximum density of the formation and correspondingly define how closely the aircraft are allowed to fly with one another. The compactness C of the formation can be defined as the ratio of minimum distance dₘᵢₙ to an actual distance between two adjacent aircraft d_{for}: $C = \frac{{d}_{min}}{{d}_{for}}$

If the formation tends towards 1 (C→1), the formations are very compact and the determination of a non-colliding trajectory set can be made more difficult. If C tends towards 0 (C→0), mutual consideration of the aircraft can be reduced or omitted, such that efficient optimization is possible in order to find a collision-free trajectory set.

In this case, dₘᵢₙ can be defined as the minimum distance of the aircraft to each other that is to be maintained during the flight.

A curvature threshold value can define the maximum curvature, or a predetermined curvature, that is allowed or intended to have a trajectory. During the formation transition, it can be advantageous that the trajectories of the aircraft lie within this threshold value in order to ensure that the maneuvers are safe and controllable.

The curvature gradient threshold value describes the maximum change in the curvature of a trajectory over time. As a result, abrupt changes in the trajectory curvature can be limited, with the result that increased stability of the aircraft can be ensured. The curvature gradient can define a rate of change in acceleration of the respective aircraft. In general, a relationship of kinematic constraints of the aircraft to the trajectory constraints can always be maintained.

A threshold value for the time until the completion of the maneuver can determine the maximum time which is available for carrying out a maneuver. In particular in a sequence of maneuvers or formation transitions, a maneuver completion time can be defined in order to enable successful execution of subsequent formation transitions.

An arrival time interval for all the aircraft can define a time period in which all the aircraft should reach their final positions. This can in particular maintain synchronicity of the formation.

Selecting the trajectories can comprise a pairwise comparison of trajectories of the aircraft in order to filter out possible and/or time deviations or path length deviations. In this case, all the aircraft can advantageously have the same speed and there can be no further arrival time restriction. If a set of trajectories is found for the group of aircraft, which is collision-free and has a path length deviation below a path length threshold value, this combination can be selected as a final trajectory set. With the constraint on freedom from collision, it can furthermore be realized that the aircraft do not control the same target states or end positions, even if at least two aircraft have the same assigned target states.

Of all the possible combinations which are collision-free and satisfy the time deviations, the method can provide a final trajectory set which represents a trajectory combination with the shortest trajectory time.

A trajectory similarity threshold value can define a maximum permissible deviation between the trajectories of the individual aircraft. When changing a formation, it is advantageous to produce a sufficient similarity of the trajectories in order to ensure a coordinated and harmonic movement of the entire formation. Furthermore, this criterion can also enable the implementation of a collision-free set with high density.

In an embodiment, candidate trajectories can be generated from each initial position to a plurality of final positions. Alternatively, the method can comprise determining a fixed final position for each aircraft corresponding to a minimum Euclidean length from the initial position of the respective aircraft to the possible final positions.

The method can thus implement an optimization with regard to different potential final positions. Alternatively, a heuristic approach can be implemented by a single, fixed final position per aircraft being defined before generating the plurality of trajectories per aircraft. In this case, the selection of the single, fixed final position can be determined with respect to a distance measure. Alternatively, a curve-curvature-based criterion can be selected for determining the positions. For example, it can be advantageous, in the case of obvious starting and final positions which, however, have a high directional deviation, not to select with respect to distance from starting and final position, but rather to limit the maximum curvature.

In one embodiment, the method can comprise processing the received trajectory. The processing can comprise determining the velocity along the trajectory for each aircraft. Furthermore, time parameterizing each trajectory of the final trajectory set depending on the velocity for each segment of the trajectory can be comprised. The processing can also comprise adapting velocity discontinuities at the boundaries between trajectory segments.

The velocity can be determined segment by segment, wherein a trajectory can consist of a plurality of segments. Correspondingly, an adaptation with respect to a velocity and/or direction continuity can take place at the segment transitions. According to the determined segment velocities, each segment section can be time parameterized: *lᵢ*(*t*) *= tvᵢ.*

Advantageously, a velocity discontinuity at the boundaries can lie below a threshold value, with the result that this can be compensated for by the flight control of the respective aircraft.

In an embodiment, the plurality of candidate trajectories can be generated for each aircraft taking into account at least one aircraft-specific constraint.

The advantage can thereby be achieved that an aircraft-specific set of trajectories can already be generated when generating the trajectories. Accordingly, constraints used for generation can be disregarded in the subsequent selection step since these constraints are already intrinsically satisfied by each trajectory in the plurality of trajectories. Advantageously, all relevant aircraft-specific constraints can already be taken into account when generating the trajectories. A subsequent selection of the final trajectory set could thus be limited to parameters which take into account the interaction of the aircraft with respect to each other or the relation of the trajectories of different aircraft with respect to each other. Thus, only a selection with respect to freedom from collision and/or trajectory similarity could take place.

In an embodiment, the plurality of candidate trajectories can be generated for each aircraft with a constant velocity for each aircraft. Each of the constant velocities can have a velocity deviation less than a velocity deviation threshold value from a predetermined target velocity.

With a limited velocity deviation, a threshold value for the trajectory lengths can also be given indirectly within the predetermined neighborhood space.

The method can comprise arc length parameterizing each trajectory of the final trajectory set.

Those which violate a curvature constraint can be disregarded from the set of trajectories which are generated for a single aircraft and a final position. Furthermore, the length of the shortest remaining candidate trajectories can be calculated, and each trajectory which is longer than an x-time of this candidate trajectory can be removed. The combination of the definition of a neighborhood environment and the removal of unnecessarily long curves can ensure that the candidate trajectories are optimized with respect to their length. Subsequently, a predefined maximum number of trajectories can be selected from the remaining candidate trajectories in order to limit a search time. This selection can be carried out evenly over the range of the path lengths. The final set of the candidate trajectories can be provided with arc length parameters.

In one embodiment, the method can further comprise determining an arrival time for each aircraft. At least one aircraft can have a deviating arrival time with respect to the further aircraft.

The arrival time for each aircraft can be defined in accordance with a maneuver to be carried out. In particular, a temporal sequence can be defined. A temporal separation can be taken into account equivalently to a spatial separation, in particular with respect to a minimum distance, when selecting possible trajectories. For example, close or identical end positions can be permissible if a sufficient temporal separation is present.

In one embodiment, the final position for each aircraft can be a relative position with respect to the further aircraft of the plurality of aircraft.

Embodiments of the invention are explained below for illustration with reference to the figures. The figures show schematic illustrations of the essential components of the system for similarity classification of radio signals, as are explained in the description of the invention. Each figure is designed such that it illustrates the mode of operation and the interrelationships of the individual modules and method steps.

In the figures:
FIG. 1 shows a schematic illustration of an embodiment of a flight guidance method;
FIG. 2 shows a schematic illustration of an embodiment of a formation of a plurality of aircraft;
FIG. 3 shows a schematic illustration of an embodiment of a neighborhood environment;
FIG. 4 shows a plurality of candidate trajectories according to an embodiment;
FIG. 5 shows an embodiment of applying a constraint;
FIG. 6A shows a plurality of candidate trajectories for fixed end points according to an embodiment;
FIG. 6B shows a final trajectory set of collision-free trajectories according to an embodiment;
FIG. 7A shows an embodiment of a final trajectory set for a curved flight of a formation;
FIG. 7B shows a further embodiment of a final trajectory set for a curved flight of a formation;
FIG. 8A shows an embodiment of a final trajectory set for first values of distance hyperparameter c₀ and a further hyperparameter with respect to number of curves c₂;
FIG. 8B shows an embodiment of a final trajectory set for second values of distance hyperparameter c₀ and a further hyperparameter with respect to number of curves c₂;
FIG. 9A shows an embodiment for a curve maneuver with a first value for a maximum permissible acceleration;
FIG. 9B shows an embodiment for a curve maneuver with a second value for a maximum permissible acceleration;
FIG. 10A shows an embodiment for a curve maneuver with a minimum distance constraint and corresponding compactness;
FIG. 10B shows a further embodiment for a further curve maneuver with a minimum distance constraint and corresponding compactness;
FIG. 11A shows an embodiment of a maneuver for formation formation; and
FIG. 11B shows an embodiment of a maneuver for a formation change.

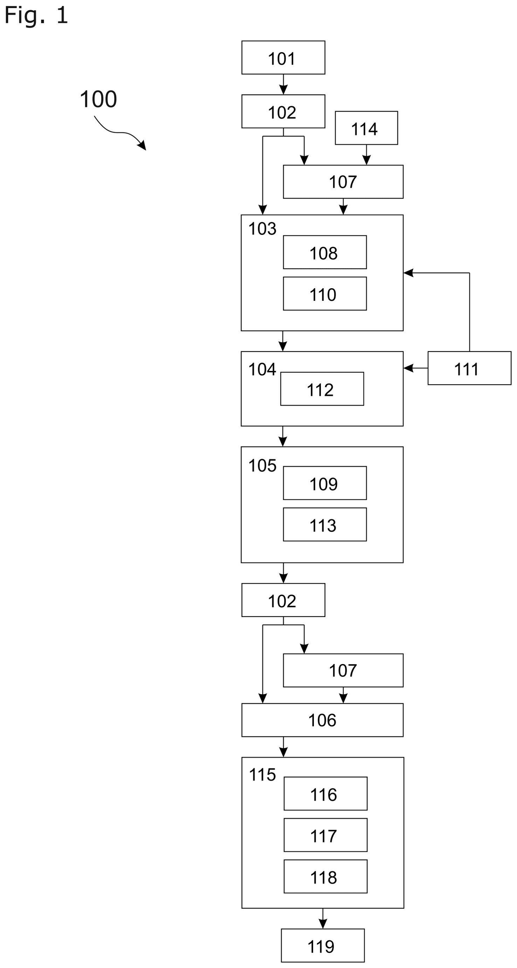

FIG. 1 shows a schematic illustration of an embodiment of a flight guidance method 100 according to the present invention.

One possibility for applying the method 100 consists in directly providing a final formation state, or a target or end state for the formation and/or each individual aircraft. The final formation state can consist of the same kinematic variables as the initial formation state. Alternatively, the final formation state can comprise more or less kinematic variables. The continuity can be ensured for all the variables comprised. Alternatively, continuity requirements can be ignored.

A final formation state can be generated automatically on the basis of predefined maneuvers in accordance with a mission profile. A mission profile can define a task for the formation and/or comprise a sequence of formation states. For example, a target formation and a desired turning angle can be specified for a turn. The desired target state can be determined automatically on the basis of these data. For a formation change, it can be sufficient to provide a target formation. For a formation forming, a desired formation, a location, for example target coordinates, and a heading can be specified. Accordingly, a plurality of different maneuvers can be implemented. In a further example, a location of a target and/or a radius around the target can be specified for a coordinated attack.

For a maneuver or a state transition of the formation, two types of time specifications can be defined. A first time specification can comprise a time window in which the maneuver is to be completed. In this case, it can be determined that all aircraft will arrive approximately at the same time but within the time window, that is to say have reached their respective target state. Furthermore, a second time specification can be specified in which a separate time window is determined for each aircraft. In this case, the aircraft can also reach the respective target state at different times. These time windows can also be determined relative to the arrival time of another aircraft (for example, one aircraft arrives two seconds after another). According to one example, further relative or absolute arrival times can be defined.

For generating (103) the trajectories, two different vacations can be used for label creation. According to one example, a heuristic variant can be implemented. In this case, the assignment can be found in such a way that the Euclidean distances are of equal length and they are as short as possible. Accordingly, the generation of the trajectories for each aircraft can be limited to trajectories from a starting state to a target state. Alternatively, in an automatic variant, trajectories from its current state to all possible target states can be generated for each aircraft. Advantageously, the generation takes place taking into account a given assignment. The optimal trajectories can thus subsequently be selected from the generated trajectories.

According to the embodiment of the method, first an initial formation state of the plurality of aircraft is determined 101 and a final formation state is established 102. Before generating 103 a plurality of candidate trajectories, a label can be assigned 107 to at least one aircraft of the plurality of aircraft. The label can define the position of the respective aircraft within the final formation state. Depending on formation constraints, a final position can be assigned to a single aircraft, a group of aircraft or all aircraft. A fixed final position for each aircraft can be determined 114 corresponding to a minimum Euclidean length from the initial position of the respective aircraft to the possible final positions. These fixed final positions can form the basis for the assignment 107 of the labels.

Subsequently, a plurality of candidate trajectories are generated 103 for each aircraft from an initial position of the respective aircraft to at least one final position in the final formation state. Here, reference can be made to the assigned labels which can correspondingly represent a constraint for generating 103 the trajectories.

A neighborhood space is defined 108 corresponding to the initial position and the at least one final position. Thus, the trajectories can be limited to the neighborhood space. Turn control points, for example Bézier points, for each plurality of candidate trajectories are positioned 110 according to an angular condition between adjacent curve points, a distance condition between adjacent curve points, a curvature rate condition at the starting position and/or a further curvature rate condition at at least one end position.

At least one constraint is applied 104 to the plurality of candidate trajectories for each aircraft to provide a reduced trajectory set. Here, the constraint can comprise an aircraft-specific parameter and a threshold value for a derivative of the trajectory. Additionally or alternatively, the constraint can comprise a threshold value for a derivative of a trajectory. A shortest-length trajectory can be determined from the plurality of candidate trajectories and combinatorially selected 112. Trajectories which exceed a trajectory length threshold value proportional to the length of the shortest-length trajectory can be removed or initially disregarded.

Trajectories that satisfy the constraints do not necessarily also have to satisfy existing kinematic constraints of the respective aircraft on the trajectory. A scanning grid can be selected in such a way that the trajectories are at least smooth and/or short. A plurality of kinematic constraints can be defined which can be implemented into kinematic constraints. These kinematic constraints can lead to constraints with respect to trajectory properties. In one example, it is possible to limit to a constant velocity. In general, the following sequence can be defined: physical condition->kinematic condition->trajectory condition. For example, the following exemplary transformation can be defined: maximum load->maximum normal acceleration->maximum curvature. According to a further example, it is possible to define: maximum lateral inclination->maximum curve rate->maximum curvature rate. Additionally or alternatively, the following parameter implementation can be defined: flight range->maximum altitude rate->maximum z-derivative. A further example comprises: low observability->maximum inclination angle (hang angle and/or pitch angle)->maximum curvature rate.

Accordingly, maximum or minimum values for the trajectory properties can be derived from the kinematic aircraft constraints. All flight paths which violate the defined constraints can then subsequently be removed from the set of flight paths.

The velocity assigned to each trajectory can be known within a predefined deviation. Trajectories which do not fall under the temporal constraints (too long, too short) can thus be filtered out.

A final trajectory set is selected 105, each comprising a trajectory from each reduced trajectory set of the corresponding aircraft, such that the final trajectory set is collision-free. In this case, the end positions of the aircraft can be determined 109 automatically on the basis of a minimization of the path length of the trajectories of the final trajectory set or a minimization of an arrival time of the aircraft.

For selecting 105 the final trajectory set, a set of selection constraints can be applied 113. The set of selection constraints can comprise at least one of the following: a path length interval, an acceleration threshold value, an acceleration interval, a speed threshold value, a speed interval, a compactness threshold value, a minimum distance between the aircraft, a curvature threshold value, a curvature gradient threshold value, a threshold value for the time until the completion of the maneuver, an arrival time interval for all the aircraft and a trajectory similarity threshold value.

The respective trajectory according to the final trajectory set is provided 106 to each corresponding aircraft.

Furthermore, aircraft capability data corresponding to the types of aircraft in the plurality of aircraft can be acquired 111. The aircraft capability data comprises at least one of the following elements: maximum load, maximum angular velocity, maximum acceleration, attitude velocity range, acceleration capability, maximum speed and hang angle.

The received trajectory is processed 115, wherein at least one of the following steps is comprised: determining 116 the velocity along the trajectory for each aircraft, time parameterizing 117 each trajectory of the final trajectory set depending on the velocity for each segment of the trajectory and adapting 118 velocity discontinuities at the boundaries between trajectory segments. Finally, each trajectory of the final trajectory set can be arc length parameterized 119.

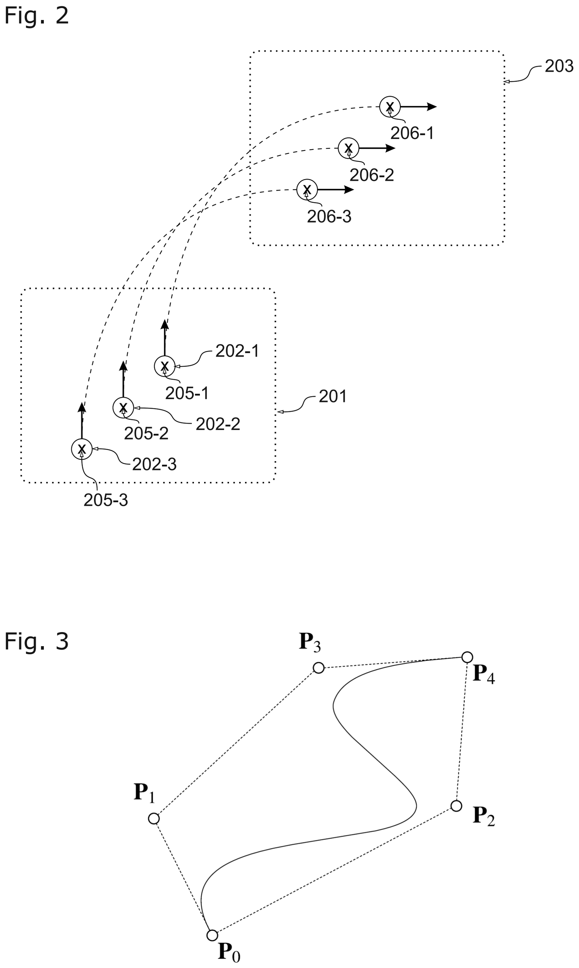

FIG. 2 shows a schematic illustration of an embodiment of a formation of a plurality of aircraft according to the present invention. The aircraft 202-1, 202-2, 202-3 can be located according to an initial formation state 201 at corresponding initial positions 205-1, 205-2, 205-3. According to a maneuver instruction, each of the aircraft 202 can follow a trajectory in order to arrive at corresponding final positions 206. A final formation state can be achieved accordingly by each aircraft 202-1, 202-2, 202-3 arriving at the corresponding final position 206-1, 206-2, 206-3 according to the final formation state 203.

FIG. 3 shows a schematic illustration of a neighborhood environment, in particular a convex envelope 301, according to the curve points P₀ to P₄. All trajectories generated according to the method for each aircraft can be located in the neighborhood environment defined for each aircraft. The neighborhood environment can be defined for each initial position P₀ and each final position P₄. A plurality of corresponding neighborhood environments can be defined with a plurality of final positions.

A plurality of trajectories can be generated with the aid of Bézier curves for each initial-target state pair. A selection of Bézier points can be defined in order to satisfy kinematic continuity conditions which are based on the state variables. These can be, for example, position, speed vectors and/or a heading. For example, a first point P₀ can be fixedly defined, with the result that it satisfies the initial position. A second point P₁ can have a variable, with the result that it maps the initial speed vector or heading. A third point P₂ can have two variables in order to form the grid and to acquire a plurality of trajectories. A fourth point P₃ can have a variable which maps the target speed vector or heading. A fifth point P₄ can be fixedly defined and satisfies the final position.

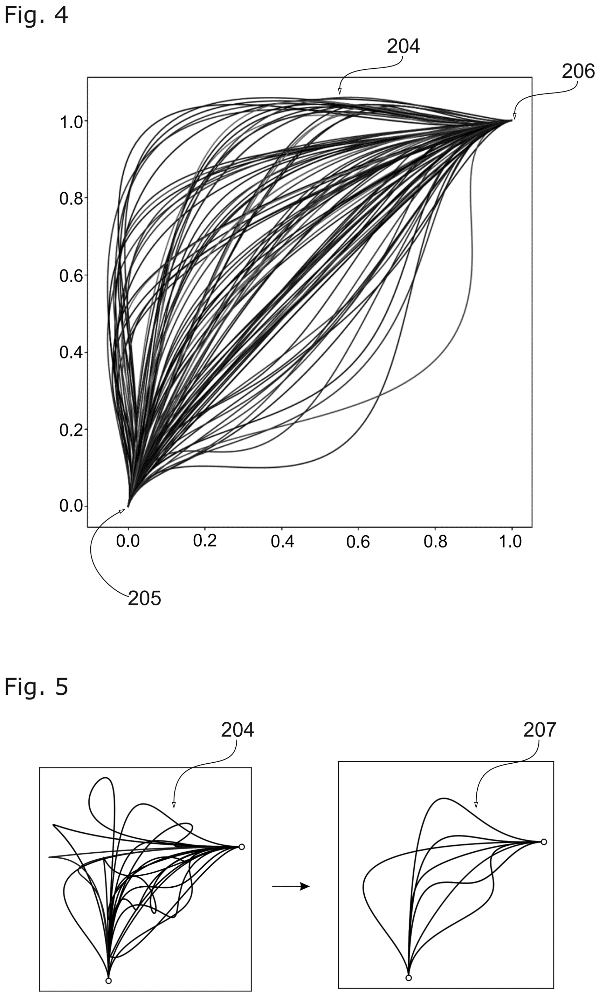

FIG. 4 shows a plurality of candidate trajectories 204 according to the present invention. The trajectories are normalized to an initial position (0,0) 205 and a final position (1,1) 206. All trajectories shown in two dimensions in the embodiments are projections of three-dimensional trajectories.

FIG. 5 shows an embodiment of applying 104 a constraint according to the present invention. Thus, the number of possible trajectories can be reduced in the further method steps. A reduced trajectory set 207 is generated on the basis of the initially generated trajectory set 204. In the embodiment shown, a filtering with respect to a limited curve curvature, or a tangential acceleration associated therewith, can be carried out.

A computational intensity of this step can be reduced, since Bézier curves can be efficiently calculated by matrix multiplication. Since the curvature is also independent of the type of parameterization, a computationally intensive arc length parameterization can be omitted in order to calculate and check the curvature.

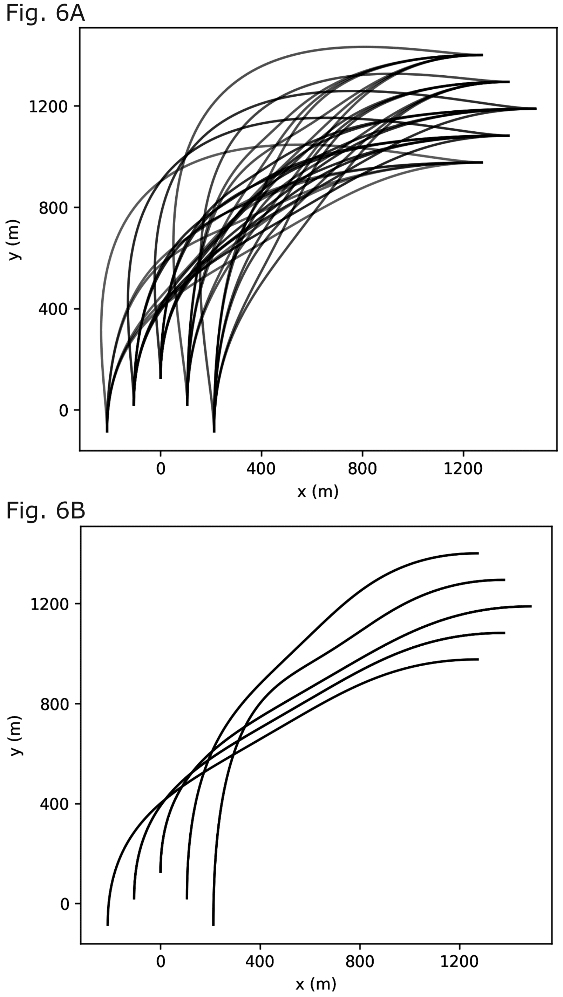

In FIGS. 6A to 11B, hatched circles mark a respective initial position of an aircraft and empty circles mark a respective final position of an aircraft.

FIG. 6A shows a plurality of candidate trajectories for fixed end points according to an embodiment of the present invention. With the reduced trajectory set, the trajectories can satisfy a curvature specification and can be relatively short. Accordingly, the object is to select a combination of these curves such that they satisfy the condition of the minimum distance and have similar path lengths.

Accordingly, FIG. 6B shows a final trajectory set of collision-free trajectories according to an embodiment. Positions within the formation are maintained. The final trajectory set is generated from the reduced trajectory set according to the embodiment shown in FIG. 6A.

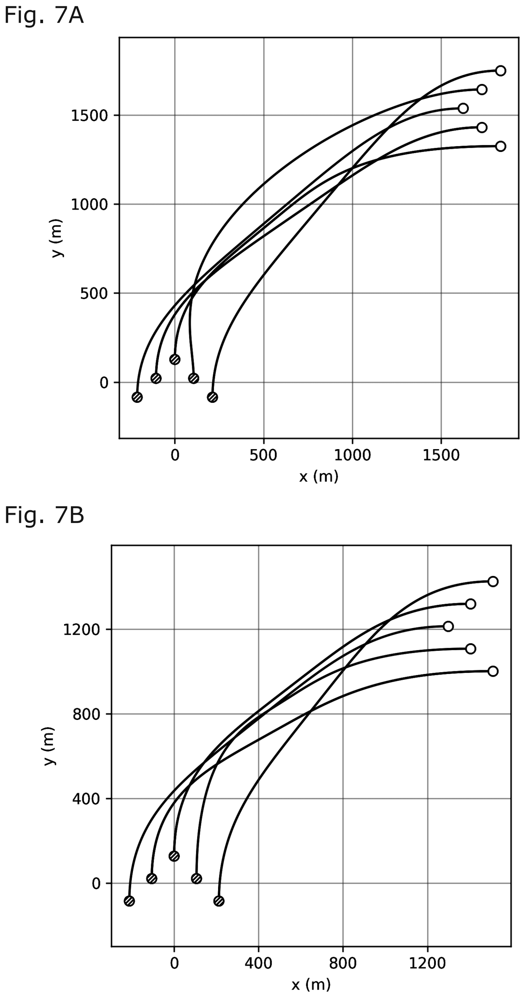

FIG. 7A shows a first embodiment for a curved flight of a formation. The positions in the final formation state are created on the basis of a heuristic label determination. With respect to a label optimization, this can enable a reduced computation time.

FIG. 7B shows an alternative embodiment to FIG. 7A for a curved flight of a formation. Accordingly, both embodiments are solutions for the same turning problem. In contrast to the heuristic method for determining the labels, the embodiment according to FIG. 7B has an optimal label assignment. Correspondingly, the end positions are optimized according to a criterion. Advantageously, a more compact trajectory solution, i.e. in particular a more complicated final trajectory set, can be determined with the optimal labels. Here, increased compactness can comprise the relative distance of the trajectories to each other and/or a more average trajectory length. Advantageously, the trajectories with optimally assigned labels can have a smaller distance and a smaller trajectory length. A maneuver with a reduced arc length can be successfully completed with the optimal position assignment.

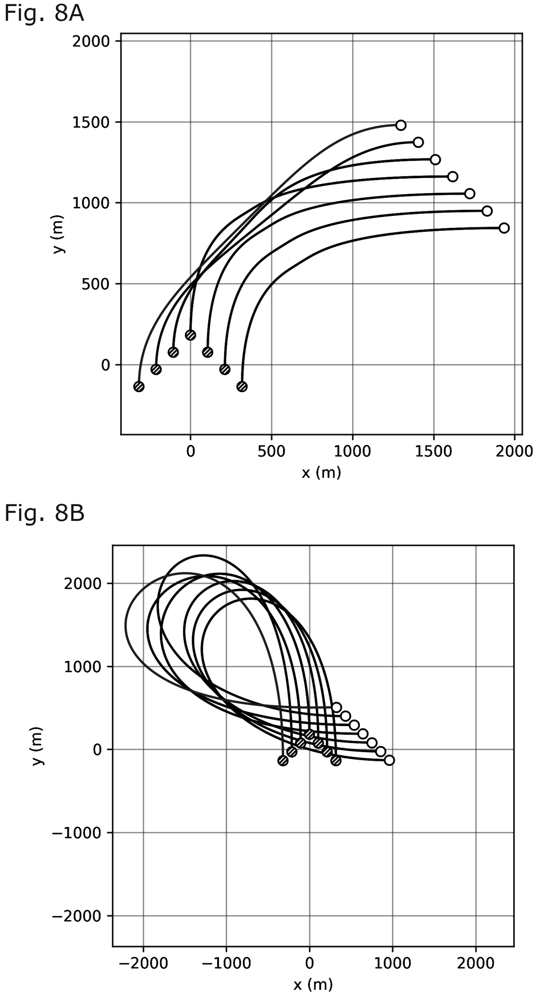

FIGS. 8A and 8B show two different embodiments for different values of a distance hyperparameter c₀ and a further hyperparameter with respect to the number of curves c₂. FIG. 8A shows a final trajectory set for a first parameter value of the hyperparameter c₀, and FIG. 8B shows a further final trajectory set for a second parameter value of the hyperparameter, which is greater than the first parameter value. The neighborhood space of the placed points can be changed with the hyperparameters.

The parameters c₀ and c₂ can establish a balance between the general provision of a possible solution and the provision of a good or optimized solution.

With an increase in value of the hyperparameters, a computation time with respect to a trajectory search can increase. At the same time, a probability can increase that a solution with smaller arc lengths is found.

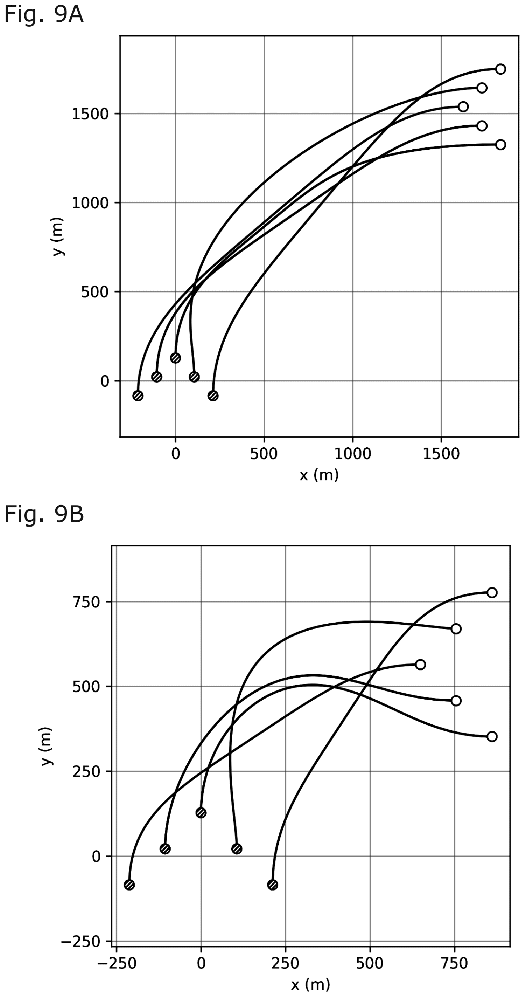

FIGS. 9A and 9B show embodiments for a curve maneuver with different values for a maximum permissible acceleration, in particular a maximum permissible normal acceleration a_{N,max}.

In addition to the optimization settings and hyperparameters, aircraft and formation parameters can also influence the computation time. For example, paths with a higher curvature can be generated with a lower maximum velocity vₘₐₓ and/or a higher normal acceleration a_{N,max}. Accordingly, they can evade each other more easily, so that solutions for smaller arc lengths can be found.

FIG. 9A shows an embodiment of a final trajectory set with a maximum normal acceleration of a_{N,max}=2g. FIG. 9B shows a further embodiment of a final trajectory set with a maximum normal acceleration of a_{N,max}=4g.

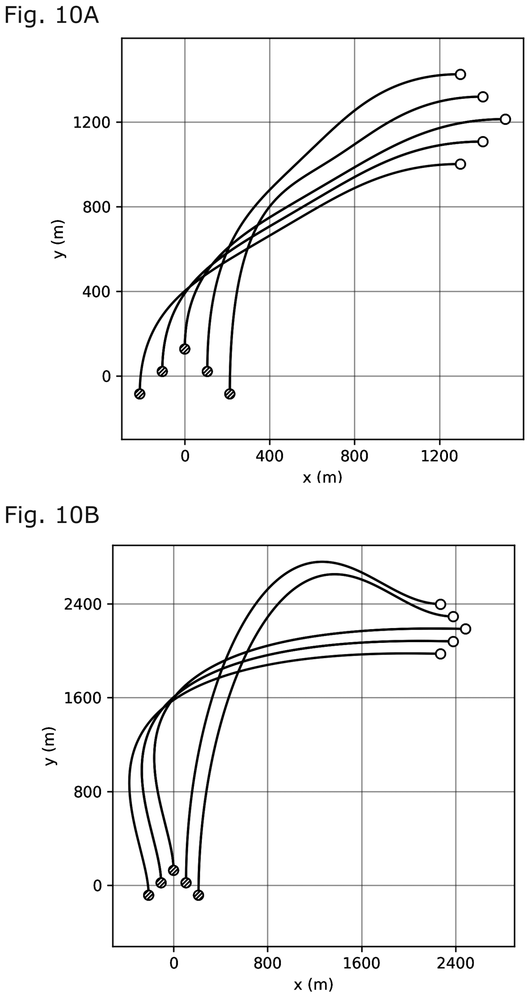

FIGS. 10A and 10B show embodiments for a curve maneuver with different values for a permissible minimum distance d_{for}. The minimum distance can in particular also define the minimum distance in the initial formation state and in the final formation state. In this case, d_{for} defines a distance between an aircraft and its neighbors. Furthermore, dₘᵢₙ defines a minimum distance of the aircraft to each other. In this case, paths can intersect and dₘᵢₙ can be maintained via a temporal separation. A general definition of the compactness can be given by the ratio of dₘᵢₙ to the average closest distance of the individual aircraft, averaged over the initial and final state.

FIG. 10A shows a curve maneuver with a first value for the constraint with respect to a minimum distance dₘᵢₙ and a corresponding first value for a compactness C. FIG. 10B shows a further curve maneuver with a second value for the constraint with respect to the minimum distance dₘᵢₙ, which is greater than the first value. Correspondingly, a second value for the compactness C is also greater.

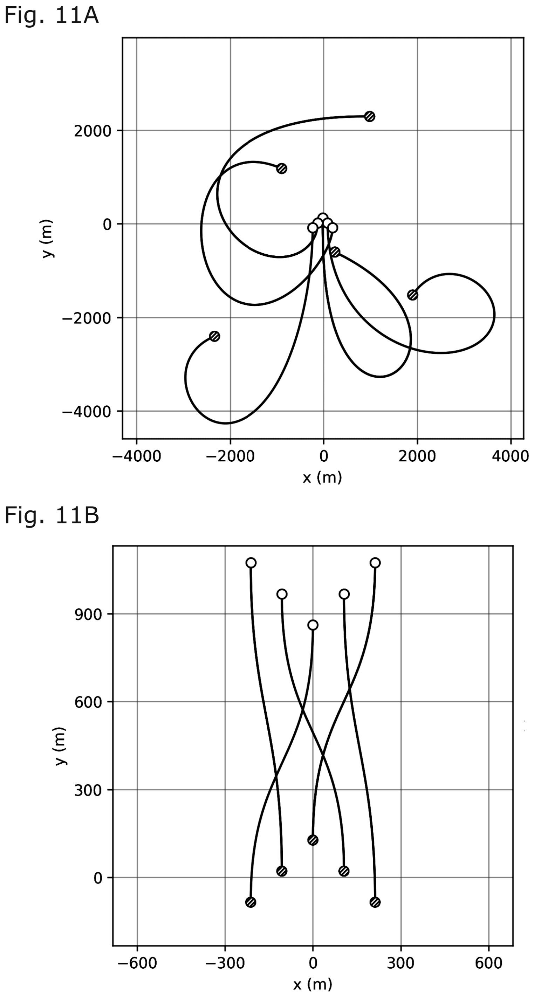

FIG. 11A shows an embodiment of a maneuver for formation formation. A corresponding trajectory is assigned in each case to aircraft with different initial positions and initial flight directions (headings), with the result that the aircraft fly in an ordered formation with the completion of the maneuver. In this case, the trajectories to each other can have a certain degree of symmetry. As a starting point, respectively initial formation state, it can be assumed that the flight directions are initially not aligned to each other. Furthermore, the aircraft can be arranged far away from each other in comparison with a minimum possible distance within a formation.

FIG. 11B shows an embodiment of a maneuver for a formation change. In this case, the aircraft can change their relative arrangement to each other within the formation.

## Claims

1. A flight guidance method (100) for guiding a formation of a plurality of aircraft, comprising the steps of:
determining (101) an initial formation state (201) of the plurality of aircraft (202);
establishing (102) a final formation state (203) of the plurality of aircraft (202);
generating (103) a plurality of candidate trajectories (204) for each aircraft (202) from an initial position (205) of the respective aircraft (202) to at least one final position (206) in the final formation state (203);
applying (104) at least one constraint to the plurality of candidate trajectories (204) for each aircraft (202) to provide a reduced trajectory set (207), wherein the at least one constraint comprises an aircraft-specific parameter;
selecting (105) a final trajectory set (208), each comprising a trajectory from each reduced trajectory set (207) of the corresponding aircraft (202), such that the final trajectory set (208) is collision-free; and
providing (106) the respective trajectory according to the final trajectory set (208) to each corresponding aircraft (202).

2. The flight guidance method (100) according to claim 1, further comprising:
assigning (107) a label to at least one aircraft of the plurality of aircraft (202), wherein the label defines the position of the respective aircraft within the final formation state (203), wherein generating (103) the plurality of candidate trajectories (204) for an aircraft with an assigned label is limited to the position according to the label of the corresponding aircraft in the final formation state.

3. The flight guidance method (100) according to any one of the preceding claims,
wherein generating (103) the plurality of candidate trajectories further comprises:
defining (108) a neighborhood space corresponding to the initial position (205) and the at least one final position (206),
wherein the trajectories are limited to the neighborhood space.

4. The flight guidance method (100) according to any one of the preceding claims,
wherein each trajectory of the plurality of candidate trajectories (204) is generated as a control point defined curve of minimum degree with the restriction of a predetermined maximum curvature threshold value.

5. The flight guidance method (100) according to any one of the preceding claims,
wherein a formation state transition between the initial formation state and the final formation state comprises a formation curve, wherein selecting (105) a final trajectory set further comprises:
automatically determining (109) the end positions of the aircraft based on at least one of:
- a minimization of the path length of the trajectories of the final trajectory set
- a minimization of an arrival time of the aircraft.

6. The flight guidance method (100) according to any one of claims 4 or 5, further comprising:
positioning (110) turn control points for each plurality of candidate trajectories according to at least one of the following conditions:
- an angular condition between adjacent curve points;
- a distance condition between adjacent curve points;
- a curvature rate condition at the starting position;
- a further curvature rate condition at at least one end position.

7. The flight guidance method (100) according to any one of the preceding claims, comprising:
acquiring (111) aircraft capability data corresponding to the types of aircrafts in the plurality of aircraft,
wherein the aircraft capability data comprises at least one of the following elements:
- maximum load;
- maximum angularr velocity;
- attitude velocity range;
- maximum speed;
- minimum speed;
- maximum climb rate;
- maximum descent rate;
- maximum hang angle
- maximum pitch angle,
wherein applying (104) the at least one constraint comprises selecting (106) trajectories that satisfy conditions according to the aircraft capability data.

8. The flight guidance method according to any one of the preceding claims,
wherein applying (104) the at least one constraint comprises:
determining (112) a shortest-length trajectory from the plurality of candidate trajectories; and
combinatorially selecting trajectories from the plurality of trajectories according to at least one of the following conditions:
- trajectory lengths of the selected trajectories fall below a trajectory length threshold value proportional to the length of the shortest-length trajectory;
- a trajectory length difference of each combination of the selected trajectories is below a trajectory length difference threshold value.

9. The flight guidance method (100) according to any one of the preceding claims,
wherein selecting (105) the final trajectory set further comprises:
applying (113) a set of selection constraints, wherein the set of selection constraints comprises at least one of:
- a path length interval;
- an acceleration threshold value;
- an acceleration interval;
- a speed threshold value;
- a speed interval;
- a speed deviation interval;
- a compactness threshold value;
- a minimum distance of the aircraft to each other;
- a curvature threshold value;
- a curvature gradient threshold value;
- a threshold value for the time until the completion of the maneuver;
- an arrival time interval for all the aircraft;
- a trajectory similarity threshold value.

10. The flight guidance method (100) according to any one of the preceding claims,
wherein candidate trajectories are generated from each initial position to a plurality of final positions, or the method comprises:
determining (114) a fixed final position for each aircraft corresponding to a minimum Euclidean length from the initial position of the respective aircraft to the possible final positions.

11. The flight guidance method (100) according to any one of the preceding claims, comprising:
processing (115) the received trajectory comprising at least one of the following steps:
- determining (116) the velocity along the trajectory for each aircraft;
- time parameterizing (117) each trajectory of the final trajectory set depending on the velocity for each segment of the trajectory;
- adapting (118) velocity discontinuities at the boundaries between trajectory segments.

12. The flight guidance method (100) according to any one of the preceding claims,
wherein the plurality of candidate trajectories are generated for each aircraft taking into account at least one aircraft-specific constraint.

13. The flight guidance method (100) according to any one of the preceding claims,
wherein the plurality of candidate trajectories are generated for each aircraft with a constant velocity for each aircraft, and
wherein each of the constant velocities has a velocity deviation less than a velocity deviation threshold value from a predetermined target velocity.

14. The flight guidance method (100) according to any one of the preceding claims, further comprising:
arc length parameterizing (119) each trajectory of the final trajectory set.

15. The flight guidance method (100) according to any one of the preceding claims, comprising:
determining an arrival time for each aircraft, wherein at least one aircraft has a deviating arrival time with respect to the further aircraft.
